# EUROPEAN PATENT APPLICATION

(11) **EP 1 935 759 A2**
(43) Date of publication of application: **25.06.2008**
(21) Application number: 07076137.4
(22) Date of filing: 13.12.2007
(51) Int. Cl.: B62D 7/14

(54) **Rear wheel steering lock out mechanism**

(30) Priority: 14.12.2006 GB 0624925
(71) Applicant: One80 Limited, Leamington Spa CV32 4PE (GB)
(72) Inventor: Randle, Steven James, Warwick CV34 6UW (GB)
(74) Representative: Tranter, Andrew David

(57) **Abstract**

A lock out mechanism 5 for a rear wheel steered vehicle is disclosed of the kind comprising a wheel 1 supported by a steering knuckle 4 which is in turn fixed to the vehicle through one or more links 2 such that the knuckle 4 is able to turn about an axis which causes the wheel 1 to turn away from a straight ahead position. The locking mechanism 5 comprises a cam 10 and a cam follower 15 and a lock pin 19 which can engage the cam follower 15 to lock it in position and prevent the cam from moving relative to the cam follower. The cam may have a cam surface provided on the steering knuckle that faces away from the axis of rotation of the knuckle 4, the surface comprising first and second arcuate segments 11, 12 with all points on the surface of the first and second segments being at least a distance D1 from the axis, the first and second segments being separated from each other by a third, recessed, segment 13 of which at least at one point is spaced a distance D2 from that axis, D2 being less than D1, the lock mechanism being arranged to cause the cam follower 15 to engage with the cam surface such that when the wheel is in the straight ahead position the cam follower 15 is biased into the recess 13 in the cam surface defined by the third segment 13 and in a locked position is prevented from leaving the recess by the lock pin 19.

## Description

This invention relates to rear wheel steering systems for vehicles which incorporates a lock out mechanisms that prevents relative angular movement between a wheel carrier and the vehicle body.

A number of different systems have been proposed for rear wheel steering of a vehicle. These all work by turning the wheels relative to the body of the vehicle. The wheel may move in an arc centred about an axis offset from the wheel. This type of design typically works by deforming one or more of the suspension links using an actuator such as a hydraulic strut of variable length.

Alternatively, the wheel may pivot about a substantially vertical axis which passes through a steering knuckle which supports the wheel. The knuckle is carried by a wheel hub carrier which is connected to the vehicle by a number of suspension links. Again, rotation of the knuckle and hence wheel relative to the vehicle can be achieved using an actuator.

In the later case, large angles of rotation may be possible. This assists in reducing the turning circle of the vehicle if the wheels are turned in the opposite direction to the front wheels.

In all the cases described above, the failure of the actuator may allow the wheel to turn freely and uncontrollably. This could lead to a collision by making the vehicle difficult or indeed impossible to control. The applicant has realised that steps must be taken to ensure such a failure cannot exist in which the wheels are free to turn, especially at high vehicle speeds.

Therefore according to a first aspect the invention provides a lock out mechanism for a rear wheel steered vehicle of the kind comprising a wheel supported by a steering knuckle which is in turn fixed to the vehicle through one or more links such that the knuckle is able to turn about an axis which causes the wheel to turn away from a straight ahead position, the locking mechanism comprising:
a cam fixed relative to the knuckle and defining an arcuate cam surface which faces away from the axis of rotation of the knuckle, the surface comprising first and second arcuate segments with all points on the surface of the first and second segments being at least a distance D1 from the axis, the first and second segments being separated from each other by a third, recessed, segment of which at least at one point is spaced a distance D2 from that axis, D2 being less than D1,
a first lock body portion connected to one of the links or to the vehicle body such that it does not turn with the knuckle, the first lock body providing a guide for a cam follower whose end portion is sized to fit within the third segment of the cam surface,
a first spring which biases the cam follower into engagement with the cam surface,
the lock mechanism being arranged to cause the cam follower to engage with the cam surface such that when the wheel is in the straight ahead position the cam follower is biased into the recess in the cam surface defined by the third segment,
and in which the lock mechanism further comprises:
   a recess provided in a side of the cam follower,
   a second lock body portion connected to the first lock body portion and which provides a guide for a lock pin;
   a second spring that biases the lock pin into engagement with the cam follower such that the lock pin is located within the recess in the cam follower when the cam follower is biased into the recess in the cam surface, interaction between the lock pin and the cam follower preventing release of the cam follower from the cam surface when the lock mechanism is in a locked position, and
   an electromagnetic actuator which provides a force that works against the force of the second spring to extract the lock pin from the recess in the cam follower when the lock mechanism is in a released position.

Preferably the cam follower moves axially along a path and most preferably moves along a substantially horizontal guide path. The lock pin may also move axially along a guide path and may most preferably move along a substantially vertical path such that the second spring urges the lock pin downwards to engage the recess in the cam follower.

The lock pin may therefore be located above the cam follower and move down to lock and up to release under control of the actuator and second spring. In the event of a failure of part of the lock mechanism the lock pin may tend to enter the recess in the cam follower due to gravitational force.

The recess in the cam follower may comprise a through bore or blind bore. The sides of the bore may co-operate with the shape of the lock pin such that the lock pin will not spring free of the bore by movement of the cam follower along its guide path.

The cam follower and lock pin may comprise cylindrical rods and their guide paths may be defined by complimentary cylindrical bores.

The first spring and second spring may comprise coil springs which act in compression. The first spring may be at least partially accommodated within an end of the cam follower opposite the end that contacts the cam surface.

The cam follower may have a smooth, conical, form like a dog tooth at the end that contacts the cam surface.

The first and second lock body portions may comprise a single unitary body.

The cam surface may be cast or milled or otherwise formed into the body of the steering knuckle itself or may be defined by a separate component fixed to a steering knuckle body.

In a modification, the cam may be fixed relative to the link or body and the lock mechanism may be mounted on the steering knuckle. In this reversal the lock mechanism will move as the knuckle whilst the cam surface stays still. Protection for this alternative arrangement may also be sought by way of this application.

According to a second aspect the invention provides a rear wheel steer mechanism incorporating the lock mechanism of the first aspect of the invention.

There will now be described by way of example only one embodiment of the present invention with reference to and as illustrated in the accompanying drawings of which:
**Figure 1** is a first view of an embodiment of a lock mechanism according to the first aspect of the invention in a released position shown (a) in cross section and (b) in plan;
**Figure 2** is a second view of the lock mechanism of Figure 1 in a locked position shown (a) in cross section and (b) in plan;
**Figure 3** is a plan view of the cam surface of the lock mechanism; and
**Figure 4** is a view of a rear wheel steering assembly which incorporates the lock mechanism of Figure 1.

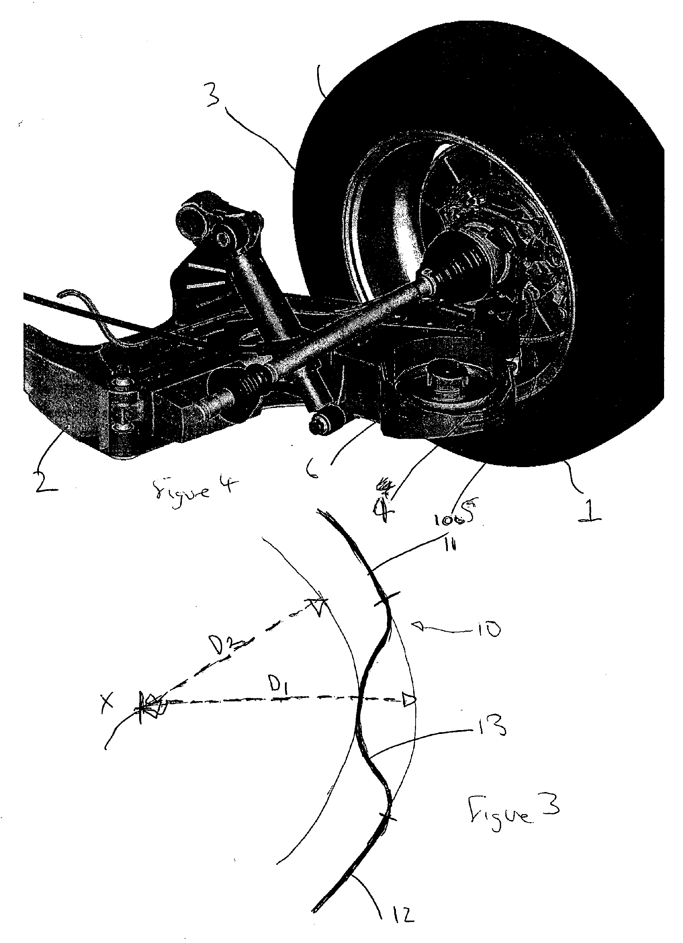

Figure 4 shows a part of a rear wheel steering assembly. It comprises a wheel and tyre 1 driven by an (optional) drive shaft 3. The wheel is supported by a steering knuckle 4 which is in turn pivotally fixed to a trailing suspension arm 3 through a bearing. The bearing is oriented such that the knuckle 4 is able to turn about a generally vertical axis which causes the wheel to turn away from a straight ahead position. This movement permits some rear wheel steering of the vehicle. Movement of the wheel up and down on hitting a bump in the road is controlled by a spring (not shown) that sits in a seat 6 on the trailing arm. The wheel 1 can be releasably locked to prevent it from turning in a free and uncontrolled manner by a locking mechanism 5 that acts between the steering knuckle 4 and the trailing arm 3.

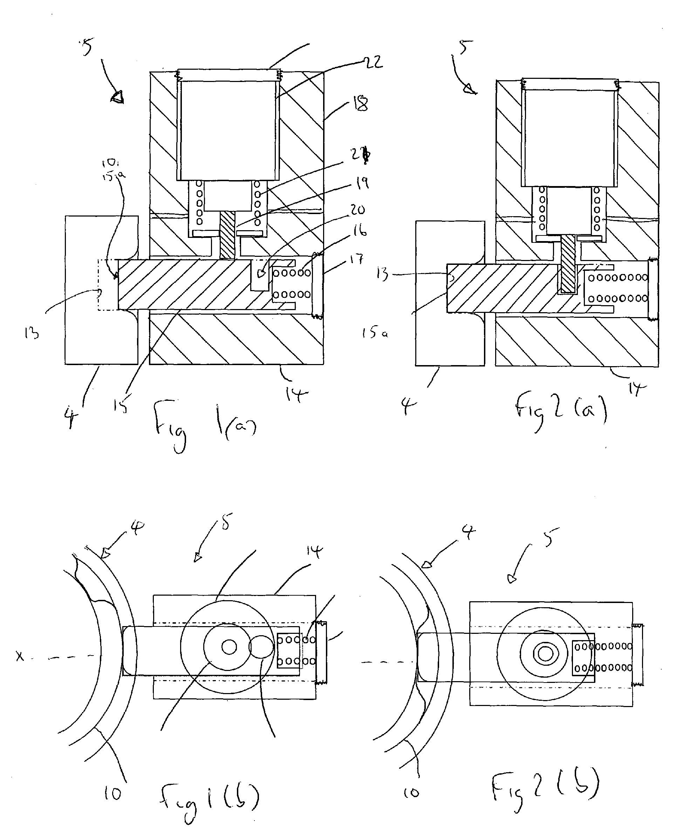

Figures 1(a) and (b) and 2(a) and (b) show in more detail the locking mechanism 5 in a released and a locked position respectively.

The locking mechanism 5 comprises a first part connected to the knuckle 4 and a second part connected to the trailing arm 3 which does not move with the knuckle 4. The first part comprises an arcuate cam surface 10 cast or milled into an outward facing surface of the knuckle 4. The surface at all points faces away from the axis of rotation of the knuckle and has first and second segments 11,12 of generally constant radius D1 about an axis X coincident with the axis of rotation of the knuckle 4, the first and second segments 11,12 being separated by a third, recessed, segment 13 which at a generally central point has a radius D2 less than the radius D1 of the first and second segments 11,12, the third segment 13 increasing in radius smoothly away from its centre to meet the first and second segments. The first, second and third segments together present a smooth continuous surface. This surface is shown best in plan view in Figure 3 of the accompanying drawings, looking down the axis of rotation of the knuckle 4.

The second part of the lock mechanism 5 comprises a first lock body portion 14 connected to the trailing arm such that it does not turn with the knuckle. The first lock body 14 provides a guide for a cam follower 15. The guide in this embodiment is in the form of an open ended cylindrical bore. A cam following surface 15a is defined on or by an end of the cam follower 15 which is sized to fit within the third segment 13 of the cam surface. By this we mean that as the cam follows the surface from first segment through third segment to second segments it will reciprocate along its guide path as it crosses the third portion, moving towards the axis of rotation of the knuckle and faithfully following the cam surface. It can simply be provided as shown by rounding off the end of the cam follower. A first spring 16 which biases the end of the cam follower into engagement with the cam surface. A cap 17 seals the end of the bore and provides a reaction surface for the first spring 16.

The lock mechanism is arranged to cause the cam follower 15 to engage with the cam surface 11,12,13 such that when the wheel 1 is in the straight ahead position the cam follower 15 is biased into the recess in the cam surface defined by the third segment 13.

The second part also comprises a second lock body portion 18 connected to the first lock body portion 14 and which provides a guide for a lock pin 19. A recess 20 is provided in a side of the cam follower 15. A second spring 21 biases the lock pin 19 into engagement with the side of the cam follower 15 such that the lock pin 19 is located within the recess 20 in the cam follower 15 when the cam follower 15 is itself biased into the recess 13 in the cam surface. Therefore interaction between the cam follower 15 and the lock pin 19 prevents release of the cam follower 15 from the recess defined by the third segment of the cam surface when the lock mechanism is in a locked position. This is because if an attempt is made to rotate the knuckle 4 it would tend to try to make the cam follower reciprocate along its guide path which it is prevented from doing.

Finally the lock mechanism includes an electromagnetic actuator 22 which provides a force that works against the force of the second spring 21 to extract the lock pin 19 from the recess 20 in the cam follower 15 when the lock mechanism is in a released position.

Figure 1(a) shows the lock mechanism in a released position in cross section and 1(b) shows the lock mechanism in the same position in plan view. In this position the knuckle and hence the wheel is free to turn about the knuckle axis. Note that as shown the wheel 1 is turned away from the central straight ahead position. When this happens the cam follower 15 is free to reciprocate along its guide path against the force of the first spring 16 with the cam follower 15 following the cam surface. The lock pin 19 is held clear of the bore in the cam follower by the electromagnetic actuator 22.

Figure 2(a) shows the lock mechanism in a locked or locked out position in cross section and 2(b) shows the lock mechanism in the same position in plan view. In this position the knuckle 4 is prevented from turning and the wheel is held in the straight ahead position. In this position the cam follower 15 is located in the recess defined by the third segment 13 of the cam surface and is prevented from moving out of that recess by the lock pin 19 which is located in the bore 20 in the cam follower 15.

If the lock mechanism is moved from the locked to unlocked position with the wheel turned away from the straight ahead position it will not initially be locked. In this state, the lock pin 19 is released by the actuator 22 and pressed onto the side of the cam follower 15. It cannot enter the hole 20 in the cam follower 15 as it is not correctly aligned. This position will persist until such time as the rear knuckle 4 turns to the straight ahead position. The cam follower 15 will then push into the recess defined by third segment of the cam surface and is biased there by the first spring. The lock pin 19 will then be biased into the bore in the cam follower by the second spring 21.

In the event that the lock mechanism is moved from the locked to the unlocked position, the cam follower can simply ride out of the third segment of cam surface due to the dog tooth shape of the end of the cam follower and the smooth transition in the surface from the thirds segment to the first or second segments.

Notable in the embodiment is the location of the lock pin 19 in a vertical bore. This ensures that, in the event of a failure such as a snapping of the lock pin 19 or spring 21 the lock pin will remain in the recess 20 under its own weight, keeping the lock mechanism safely locked.

## Claims

1. A lock out mechanism for a rear wheel steered vehicle of the kind comprising a wheel supported by a steering knuckle which is in turn fixed to the vehicle through one or more links such that the knuckle is able to turn about an axis which causes the wheel to turn away from a straight ahead position, the locking mechanism comprising:
a cam fixed relative to the knuckle and defining an arcuate cam surface which faces away from the axis of rotation of the knuckle, the surface comprising first and second arcuate segments with all points on the surface of the first and second segments being at least a distance D1 from the axis, the first and second segments being separated from each other by a third, recessed, segment of which at least at one point is spaced a distance D2 from that axis, D2 being less than D1,
a first lock body portion connected to one of the links or to the vehicle body such that it does not turn with the knuckle, the first lock body providing a guide for a cam follower whose end portion is sized to fit within the third segment of the cam surface,
a first spring which biases the cam follower into engagement with the cam surface,
the lock mechanism being arranged to cause the cam follower to engage with the cam surface such that when the wheel is in the straight ahead position the cam follower is biased into the recess in the cam surface defined by the third segment,
and in which the lock mechanism further comprises:
a recess provided in a side of the cam follower,
a second lock body portion connected to the first lock body portion and which provides a guide for a lock pin;
a second spring that biases the lock pin into engagement with the cam follower such that the lock pin is located within the recess in the cam follower when the cam follower is biased into the recess in the cam surface, interaction between the lock pin and the cam follower preventing release of the cam follower from the cam surface when the lock mechanism is in a locked position, and
an electromagnetic actuator which provides a force that works against the force of the second spring to extract the lock pin from the recess in the cam follower when the lock mechanism is in a released position.

2. The lockout mechanism according to claim 1 in which the cam follower moves axially along a path.

3. The lockout mechanism according to claim 2 in which the cam follower moves along a horizontal guide path.

4. The lockout mechanism according to claim 1, 2 or 3 in which the lock pin moves axially along a guide path.

5. The lockout mechanism of claim 4 in which the lock pin moves along a vertical guide path such that the second spring urges the lock pin downwards to engage the recess in the cam follower.

6. The lockout mechanism of claim 5 in which the lock pin is located above the cam follower and moves down to lock and up to release under control of the actuator and second spring.

7. The lockout mechanism of any preceding claim in which the recess in the cam follower comprises a through bore or blind bore.

8. The lockout mechanism of any preceding claim in which the cam follower and lock pin comprise cylindrical rods and their guide paths are defined by complimentary cylindrical bores.

9. The lockout mechanism of any preceding claim in which the first spring and second spring comprise coil springs which act in compression.

10. The lockout mechanism of claim 9 in which the first spring is at least partially accommodated within an end of the cam follower opposite the end that contacts the cam surface.

11. The lockout mechanism of any preceding claim in which the cam follower has a smooth, conical, form like a dog tooth at the end that contacts the cam surface.

12. The lockout mechanism according to any preceding claim in which the first and second lock body portions comprise a single unitary body.

13. The lockout mechanism of any preceding claim in which the cam surface is cast or milled or otherwise formed into the body of the steering knuckle.

14. The lockout mechanism of any preceding claim in which, as an alternative, the cam surface is fixed relative to the link or body and the lock mechanism is mounted on the steering knuckle.

15. A rear wheel steer mechanism incorporating the lock mechanism of any one claims 1 to 14.
